Europäisches Patentamt

European Patent Office

Office européen des brevets

(11) Veröffentlichungsnummer: **0 242 430**
A1

# (12) EUROPÄISCHE PATENTANMELDUNG

(21) Anmeldenummer: 86112986.4

(22) Anmeldetag: 20.09.86

(51) Int. Cl.³: **F 16 J 15/32**

(30) Priorität: 11.04.86 DE 3612331

(43) Veröffentlichungstag der Anmeldung:
28.10.87 Patentblatt 87/44

(84) Benannte Vertragsstaaten:
AT BE CH DE FR GB IT LI NL SE

(71) Anmelder: Firma Carl Freudenberg
Höhnerweg 4
D-6940 Weinheim/Bergstrasse(DE)

(72) Erfinder: Blesing, Dieter
Im Klingen 9
D-6149 Fürth(DE)

(72) Erfinder: Ridderskamp, Franz
Schlossgasse 38
D-6940 Weinheim(DE)

(74) Vertreter: Weissenfeld-Richters, Helga, Dr. et al,
Höhnerweg 2
D-6940 Weinheim/Bergstrasse(DE)

(54) Dichtungsanordnung.

(57) Eine Dichtungsanordnung aus einer in Richtung des relativ bewegbaren Maschinenteiles (6) geöffneten Nute (5) und einem Abstreifring, der mit einem in radialer Richtung vorspringenden Flansch (1) in die Nute (5) eingreift und in derserselben festgehalten wird. Der Abstreifring besteht einstückig aus elastischem Werkstoff. Der Flansch (1) weist ein in Richtung der Dichtungsachse geneigtes Rautenprofil auf. Trotz variabler Erstreckung der Nute (5) in axialer Richtung ergibt sich dadurch eine gleichbleibende Zuordnung und Anpressung zwischen der Dichtlippe (4) und dem relativ bewegbaren Maschinenteil (6).

Fig 1

EP 0 242 430 A1

Beschreibung:

Die Erfindung betrifft eine Dichtungsanordnung nach dem Oberbegriff von Anspruch 1.

Eine solche Dichtungsanordnung zeigt beispielsweise der Katalog Nr. 410, Ausgabe 1973, Seite 48, der Anmelderin. Sie erfordert eine präzise Dimensionierung der aufnehmenden Nute, welche sich jedoch in der Praxis nicht immer gewährleisten läßt. Starker Verschleiß und vorzeitiger Ausfall der Dichtung können hiervon die Folge sein.

Der Erfindung liegt die Aufgabe zugrunde, eine Dichtungsanordnung der vorgenannten Art derart weiter zu entwickeln, daß befriedigende Gebrauchseigenschaften auch dann gewährleistet sind, wenn die Anpressung der axialen Begrenzungsflächen der Nut zu einer elastischen Deformierung des einen Bestandteil des Abstreifringes bildenden Flansches führt.

Diese Aufgabe wird erfindungsgemäß dadurch gelöst, daß der Flansch ein parallel in der Richtung der Dichtungsachse geneigtes Rautenprofil aufweist und daß die beiderseitigen Berührungslinien zwischen dem Rautenprofil und den axialen Begrenzungsflächen der Nut einen unterschiedlichen Abstand von der Dichtungsachse haben. Radial innerhalb und/oder außerhalb von wenigstens einer der Berührungslinien ist ein Pufferraum zwischen der Begrenzungsfläche und dem Flansch vorhanden, in welchen der den Flansch bildende, elastisch verformbare Werkstoff bei einer zunehmenden axialen Verpressung ausweichen kann. Die dem relativ bewegten Maschinenteil zugewandte, radiale Begrenzungsfläche des Flansches erfährt dadurch in einem solchen Falle keine Veränderung ihrer radialen Lage.
Eine gleichbleibende Zurodnung der Dichtlippe zu dem
relativ bewegten Maschinenteil ist dadurch stets gewährleistet.

Die axialen Begrenzungsflächen des Außenprofils schließen mit der Dichtungsachse zweckmäßig einen Winkel von
45 bis 65° ein. Kleinere Winkel führen zu einer unzureichenden Stabilität und Festlegung des Abstreifringes
in der aufnehmenden Nut, während bei größeren Winkeln
der erzielte Spielausgleich noch wenig befriedigend
ist. Die Begrenzungsflächen der aufnehmenden Nute schließen mit der Dichtungsachse in aller Regel einen Winkel
von 90° ein.

Die von der Dichtlippe abgewandte Berührungslinie zwischen dem Rautenprofil und der Begrenzungsfläche der
Nut kann einen größeren Abstand von der Dichtungsachse
haben als die gegenüberliegende Berührungslinie. Sie
stimmt zweckmäßig im wesentlichen überein mit dem Außendurchmesser des Flansches, was neben einer optimalen
Stabilität einen größtmöglichen Spielausgleich gestattet.

Eine beispielhafte Ausführung der erfindungsgemäßen
Dichtungsanordnung ist in der in der Anlage beigefügten
Zeichnung dargestellt. Sie wird nachfolgend näher erläutert:

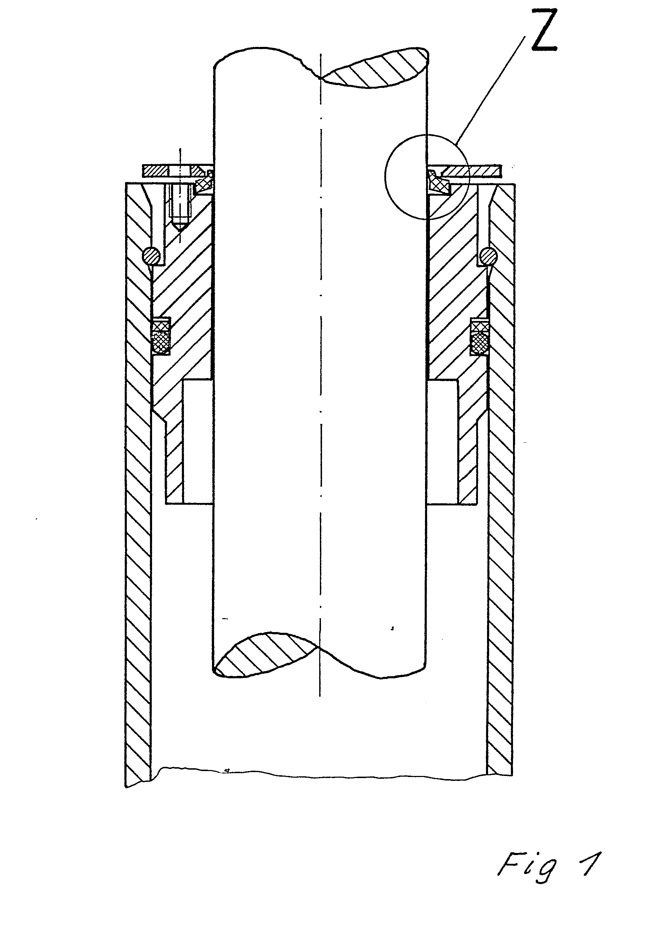

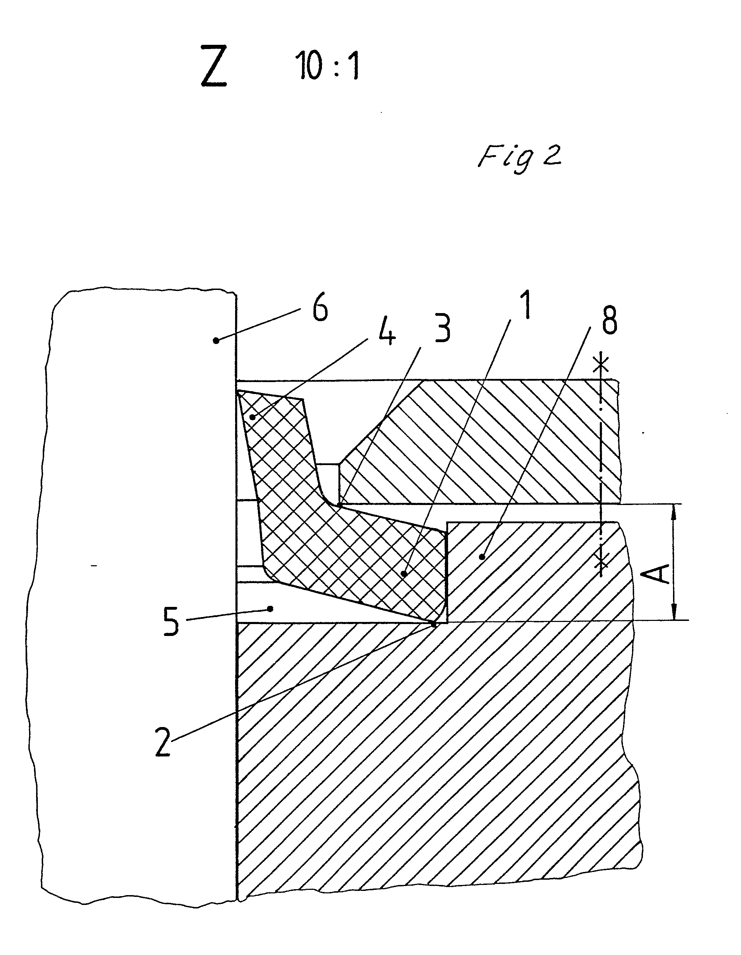

Die in den Fig. 1 und 2 gezeigte Dichtungsanordnung
ist bestimmt für den Spalt zwischen einer hin- und hergehenden Kolbenstange 6 und einer diese in geringem radialen
Abstand umschließenden Zylinderwandung 8. Letztere ist mit
einer in Richtung der Kolbenstange 6 radial geöffneten Nut 5
versehen, in welche der Flansch 1 eines mit einer Dichtlippe 4 versehenen Abstreifringes eingeschnappt ist.
Der Flansch 1 hat ein Rautenprofil, welches an den
axialen Begrenzungsflächen der Nut 5 unter einer axialen
Vorspannung anliegt. Die sich dabei ergebenden, beiderseitigen Berührungslinien 2,3 haben einen von einander
verschiedenen Abstand von der Dichtungsachse. Radial
außerhalb der Berührungslinien sind Pufferräume zwischen
dem Rautenprofil des Flansches 1 und den axial benachbarten Begrenzungsflächen der Nut vorhanden. Auch bei
einer betriebsbedingten Veränderung des gegenseitigen
Abstandes A der axialen Begrenzungsflächen der Nut wird so
eine radiale Verlagerung der inneren Begrenzungsfläche
des Flansches 1 vermieden und dadurch auch in einem
solchen Falle eine gleichbleibende Zurodnung der Dichtlippe
4 zur Oberfläche der abgelichteten Stange 6 gewährleistet.

Patentanwältin

· 6940 Weinheim/Bergstraße ·
Telefon (0 62 01) 80-86 18
Telex 4 65 531   **0242430**

18. September 1986
Mo/K
S 381/Europa

1

Anmelderin: Firma Carl Freudenberg, Weinheim

## Dichtungsanordnung

## Patentansprüche

1. Dichtungsanordnung, umfassend eine radial in Richtung
   des relativ bewegbaren Maschinenteiles geöffnete
   Nute und einen Abstreifring, bei der der Abstreifring
   einstückig aus elastischem Werkstoff geformt ist
   und mit einem im wesentlichen in radialer Richtung
   vorspringenden Flansch in die Nut eingreift, wobei
   die axialen Begrenzungsflächen der Nut und der Flansch
   aneinander angepresst sind, dadurch gekennzeichnet,
   daß der Flansch (1) ein parallel zu der Richtung
   der Dichtungsachse geneigtes Rautenprofil aufweist
   und daß die beiderseitigen Berührungslinien (2,3)
   zwischen dem Rautenprofil und den axialen Begrenzungsflächen der Nut (5) einen unterschiedlichen Abstand
   von der Dichtungsachse haben.

2. Dichtungsanordnung nach Anspruch 1, dadurch gekennzeichnet, daß die von der Dichtlippe (4) abgewandte
   Berührungslinie zwischen dem Rautenprofil und der Begrenzungsfläche der Nut (5) einen größeren Abstand
von der Dichtungsachse aufweist  als die gegenüberliegende Berührungslinie.

3. Dichtungsanordnung nach Anspruch 2, dadurch gekennzeichnet, daß die von der Dichtlippe (4) abgewandte
Berührungslinie und der Außendurchmesser des Rautenprofils des Flansches (1) im wesentlichen übereinstimmen.

Fig 1

Z     10 : 1

Fig 2

Europäisches
Patentamt

**EUROPÄISCHER RECHERCHENBERICHT**

Nummer der Anmeldung
0242430

EP 86 11 2986

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-1 336 911 (SULZER FRERES SA) <br> * Figuren 3,7; Seite 4, rechte Spalte, Zeile 42 - Seite 5, linke Spalte, Zeile 13 * | 1 | F 16 J 15/32 |
| A | | 2,3 | |
| | --- | | |
| Y | DE-A-2 554 349 (BOGE GmbH) <br> * Figur 5; Seite 9, Zeilen 1-14 * | 1 | |
| A | | 2,3 | |
| | --- | | |
| A | FR-A-1 104 906 (ETS HOUDAILLE) <br> * Figuren 1,4-6 * | 1-3 | |
| | ----- | | RECHERCHIERTE SACHGEBIETE (Int. Cl.4) |
| | | | F 16 J |

Der vorliegende Recherchenbericht wurde für alle Patentansprüche erstellt.

| Recherchenort | Abschlußdatum der Recherche | Prüfer |
|---|---|---|
| DEN HAAG | 11-08-1987 | NARMINIO A. |